# EUROPEAN PATENT APPLICATION

(11) **EP 2 846 012 A1**
(43) Date of publication of application: **11.03.2015**
(21) Application number: 13183681.9
(22) Date of filing: 10.09.2013
(51) Int. Cl.: F01N 3/20

(54) **System for purifying the exhaust gases of a combustion engine.**

(71) Applicant: Inergy Automotive Systems Research (Société Anonyme), 1120 Bruxelles (BE)
(72) Inventor: Slusser, Kevin, Ixelles 1050 (BE); Naydenov, Volodia, 1348 Louvain-la-Neuve (BE); Jannot, Frédéric, 1470 Bousval (BE)
(74) Representative: Remy, Vincent Noel Paul

(57) **Abstract**

SCR system (200) for purifying the exhaust gases of an internal combustion engine of a vehicle, comprising:
- a tank (201) for the storage of an ammonia precursor;
- a delivery module (202) comprising at least one electrical component;
- a controller (205) configured to control said electrical component.

The controller is such that it is attached to or mounted inside a part of the delivery module.

## Description

The present invention relates to a system for purifying the exhaust gases of a combustion engine (i.e. SCR system). The invention further relates to a delivery module for use in such system.

Legislation on vehicle and truck emissions stipulates, amongst other things, a reduction in the release of nitrogen oxides NOx into the atmosphere. One known way to achieve this objective is to use the SCR (Selective Catalytic Reduction) process which enables the reduction of nitrogen oxides by injection of a reducing agent, generally ammonia, into the exhaust line. This ammonia may derive from the pyrolytic (thermal) decomposition of an ammonia precursor solution, generally a urea solution.

With the SCR process, the high levels of NOx produced in the engine during combustion at optimized efficiency are treated in a catalyst on exiting the engine. This treatment requires the use of the reducing agent at a precise concentration and of extreme quality.

In order to do this, it is necessary to equip the vehicles with a tank containing an additive solution (generally a eutectic urea/water solution) and also with a device for metering the desired amount of additive and injecting it into the exhaust line.

It is known different SCR system architectures. One known architecture is based on the use of a subassembly, also called hereafter "delivery module", for supplying additive to said device for metering. Generally, such delivery module comprises several electrical components, for example, a pump, a pressure regulator, a filter, a heating element, a temperature sensor, a level sensor etc.

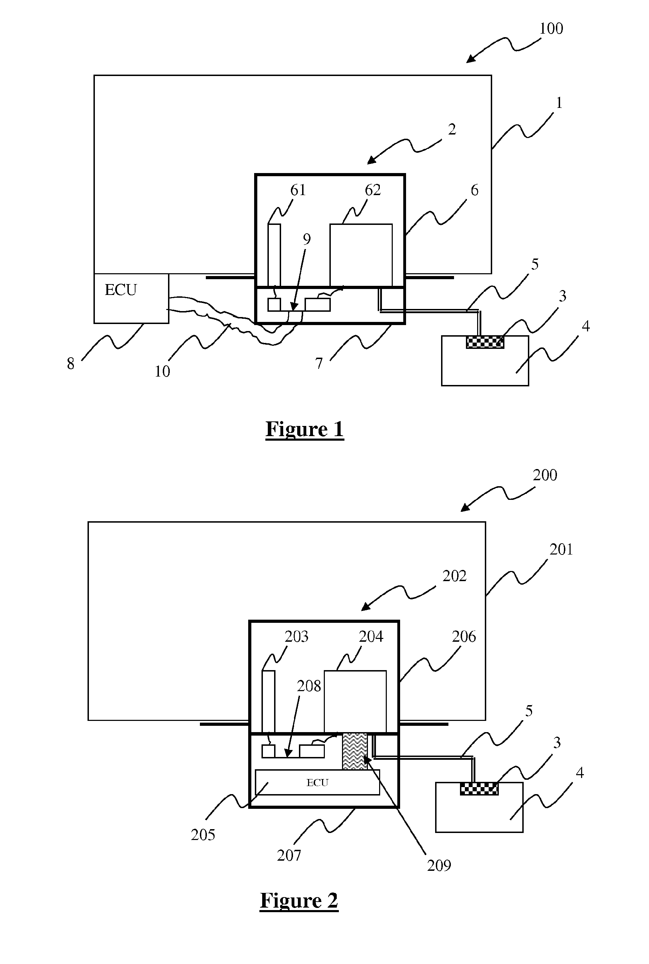

Figure 1 is a schematic view of a known SCR system architecture. As illustrated in Figure 1, the known SCR system 100 comprises:
- a tank 1 for the storage of an ammonia precursor solution (for example, urea), the tank being mounted on board a vehicle;
- a delivery module 2 mounted in a leak tight manner to the tank;
- an injector 3 configured to inject the ammonia precursor solution into the exhaust line 4 of the vehicle; and
- an injection line 5 that connects the delivery module 2 and the injector 3.

The delivery module 2 comprises a base plate 6 (also called "flange" or mounting plate) and a cover 7. The base plate 6 comprises several components 61, 62 which are in contact with the ammonia precursor solution. The cover 7 is adapted to be fixed to the base plate 6. The cover comprises an electrical connector 9 adapted to connect the components 61, 62 to a controller 8 (or "ECU", for "engine control unit"). Generally, the controller 8 is mounted either on the tank 1 or on the vehicle chassis. The controller 8 is connected to the electrical connector 9 via a large wiring harness 10. The use of such wiring harness increases the overall cost of the system and increases the complexity of assemble. Moreover, mounting the controller on the tank or on the vehicle chassis increases the risk of electromagnetic interference (i.e. "EMC" for "electromagnetic compatibility") with other controller or other electronic devices on the vehicle. Another disadvantage of mounting the controller on the tank or on the vehicle chassis is that it is needed to use specific means (shield or cover) to protect the controller from stone impact or to protect it from water or salt projecting from the road face.

In view of the above-mentioned disadvantages, there exists a need for an improved SCR system architecture.

An object of the present invention is to solve these above-mentioned problems by proposing an SCR system for_purifying the exhaust gases of an internal combustion engine of a vehicle, comprising:
- a tank for the storage of an ammonia precursor solution;
- a delivery module comprising at least one electrical component;
- a controller configured to control said electrical component.

According to one aspect of the present invention, the controller is attached to or mounted inside a part of the delivery module.

Thus, it is proposed an improved SCR system architecture in which the controller (ECU) is integrated to the delivery module. This is understood to mean that the controller is either attached to the delivery module or produced at least partly from one piece with the delivery module. Indeed, the controller of the present invention can be fixed to the delivery module. For example, the controller can be welded, clipped or glued to a part of the delivery module. The controller of the present invention can also be mounted inside a part of the delivery module. For example, the controller can be partially or entirely overmoulded in a part of the delivery module. In yet another particular embodiment, the controller can be placed inside a housing of the delivery module. According to the invention, no large wiring harness is used to connect the controller to the delivery module. Thus, the SCR system architecture of the present invention is compact, easy to assemble and economic. In addition, the safety of the system is increased since the electrical connection between the controller and the components of the delivery module can be integrated inside the delivery module.

The system according to the invention comprises a tank intended for storing an ammonia precursor solution. This tank may be made from any material, preferably one that is chemically resistant to the solution in question. In general, this is metal or plastic. In the case of urea solution, polyolefin resins, in particular polyethylene (and more particularly HDPE or high-density polyethylene), constitute preferred materials.

In an advantageous embodiment, the controller is attached to or mounted inside a part of the delivery module in a manner such that the controller can be in thermal communication with at least one component of the delivery module and/or with at least one hydraulic line of the SCR system.

In a particular embodiment, the controller can be used as a heating device. Indeed, the heat dissipated by the controller can be used to heat one or several components of the delivery module.

In another particular embodiment, the temperature of the controller can be regulated. For example, the controller can be mounted closed to a hydraulic line of the SCR system so that the temperature of the controller can be cooled down by the hydraulic line when this temperature exceeds a predetermined threshold. Thus, it is possible to maintain safe operating temperature of the controller and so to increase the lifetime of the controller.

Advantageously, the delivery module comprises at least one thermal conductor. Such thermal conductor permits to accelerate the thermal transfer between the controller and, for example, the injection line of the SCR system. In a particular embodiment, the thermal conductor can be a thermal paste. In another particular embodiment, the thermal conductor can be a grid or a plate made of good thermal conductive material such as aluminium or copper.

In a preferred embodiment, the delivery module comprises a base plate onto which the component(s) of the delivery module are fixed and a cover adapted to be fixed to the base plate. Advantageously, the controller is placed inside the cover. The assembly of the controller inside the cover is simple. In addition, the cover can be used as a shield for protecting the controller from external attacks (for example, stone impact or electromagnetic interference). Further, the cover can be used to collect the heat dissipated from the controller. In this case, the cover acts as a heat sink. Advantageously, the wall of the cover may comprises several fins or blades configured to direct the collected heat towards a specific area or part of the delivery module, or to uniformly radiate the collected heat in the delivery module. In a particular embodiment, the cover can be surrounded by phase change materials (PCM) or can contain PCM material, so that the heat dissipated and collected from the controller continues to be transferred while the vehicle is at rest.

Preferably, the base plate is an "immersed" base plate (that is to say a base plate that is always in the solution, provided that the tank is not empty). Preferably, the cover extends outside the tank. Preferably, the base plate is positioned through an opening made in the bottom wall of the tank.

Preferably, the base plate integrates several active storage and/or metering components and, most particularly, it integrates all the active components which are brought to be in contact with the liquid additive (i.e. ammonia precursor solution) found in, leaving from or arriving into the tank.

In a preferred embodiment, the controller is further configured to control and/or pilot at least one component external to the delivery module. Thus, the controller of the invention has an enlarged control perimeter (i.e. not restricted to the delivery module). An advantage of this configuration is that the controller can collect more data and perform a more efficient management and/or diagnosis of the SCR system. Another advantage of this configuration is that the controller can dissipate more heat, since it performs more operations, and such heat can be used, for example, to thaw more rapidly ammonia precursor solution in frozen state. In a particular case, the controller of the invention can execute a command received from the vehicle ECU. For example, the controller of the invention can power (i.e. pilot) a line heater in response to a command from the vehicle ECU

Advantageously, said at least one component external to the delivery module comprises at least one of the following components: an exhaust line sensor; an injector, a dosing fluid line heater, a second tank heater...

The present invention also concerns a delivery module for an SCR system according to any one of the preceding claims, said delivery module comprising:
- at least one electrical component; and
- a controller being configured to control said electrical component and being attached to or mounted inside a part of the delivery module.

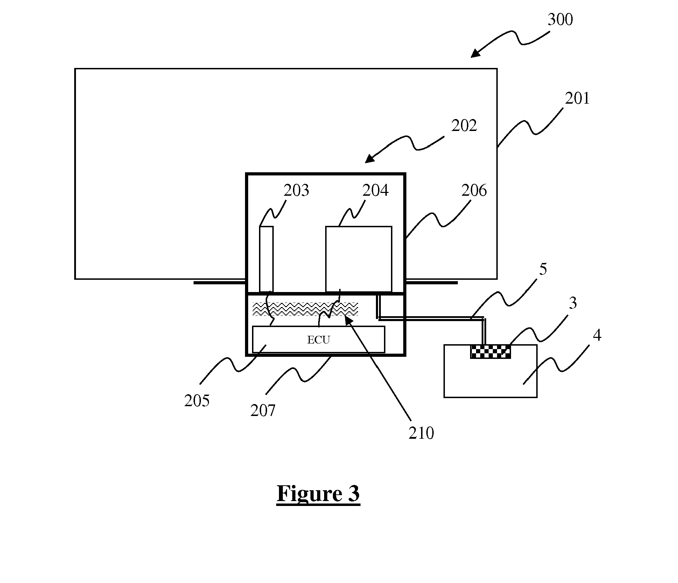

The present invention is illustrated in a non limitative way by the examples below relying on figures 2 and 3 attached. In these figures, identical or similar devices bear identical reference numbers.

Figure 2 is a schematic view of a SCR system 200 according to a first particular embodiment of the present invention.

As illustrated in the example of Figure 2, the system 200 comprises:
- a tank 201 for the storage of an ammonia precursor solution;
- a delivery module 202 comprising several electrical components 203, 204; and
- a controller 205 configured to control the electrical components 203, 204.

In a particular embodiment, the tank 201 stores an aqueous urea solution, for example AdBlue® solution (commercial solution of urea).

The delivery module 202 comprises a base plate 206 and a cover 207. The cover 207 is fixed to the base plate 206. The cover comprises an electrical connector 208 adapted to connect the components 203, 204 to the controller 205.

In the example of Figure 2, the controller 205 is placed inside the cover 207. A thermal paste 209 is placed between the controller 205 and the component 204. For example, the component 204 is the pump assembly of the SCR system.

Figure 3 is a schematic view of a SCR system 300 according to a second particular embodiment of the present invention. As illustrated in the example of Figure 3, the controller 205 integrates an electrical connector for connecting to the components 203, 204. The controller 205 is placed inside the cover 207. The cover comprises a thermally conductive grid 210 placed between the controller 205 and the components 203, 204.

In a third particular embodiment of the present invention (not represented), the controller 205 is entirely integrated within the bottom wall of the cover 207, for example by using an overmoulding technique.

## Claims

1. SCR or Selective Catalytic Reduction system (200) for_purifying the exhaust gases of an internal combustion engine of a vehicle, comprising:
- a tank (201) for the storage of an ammonia precursor solution;
- a delivery module (202) comprising at least one electrical component (203, 204);
- a controller (205) configured to control said electrical component,
wherein the controller is attached to or mounted inside a part of the delivery module.

2. SCR system according to the preceding claim, wherein the controller is attached to or mounted inside a part of the delivery module in a manner such that the controller can be in thermal communication with at least one component of the delivery module and/or with at least one hydraulic line of the SCR system.

3. SCR system according to the preceding claim, wherein the delivery module comprises at least one thermal conductor (209, 210).

4. SCR system according to any one of claims 1 to 3, wherein the delivery module comprises a base plate onto which the component(s) of the delivery module are fixed and a cover adapted to be fixed to the base plate, and wherein the controller is placed inside the cover.

5. SCR system according to the preceding claim, wherein the cover is surrounded by phase change material or contain phase change material.

6. SCR system according to any one of claims 1 to 5, wherein the controller is further configured to control at least one component external to the delivery module.

7. SCR system according to the preceding claim, wherein said component external to the delivery module comprises at least one of the following components: an exhaust line sensor; an injector, a dosing fluid line heater, and a second tank heater.

8. SCR system according to any one of claims 1 to 7, wherein the ammonia precursor solution is a urea solution.

9. Delivery module for an SCR system according to any one of the preceding claims, said delivery module comprising:
- at least one electrical component; and
- a controller configured to control said electrical component,
wherein the controller is attached to or mounted inside a part of the delivery module.
